# EUROPEAN PATENT SPECIFICATION

(11) **EP 0 274 899 B1**
(45) Date of publication and mention of the grant of the patent: **09.02.1994**
(21) Application number: 87311364.1
(22) Date of filing: 23.12.1987
(51) Int. Cl.: C08J 5/24

(54) **Highly tough composite materials**
Zähe Verbundmaterialien
Matériaux composites tenaces

(30) Priority: 25.12.1986 JP 315116/86; 07.01.1987 JP 548/87; 07.01.1987 JP 549/87; 16.10.1987 JP 262028/87; 16.10.1987 JP 262029/87
(43) Date of publication of application: 20.07.1988
(73) Proprietor: TORAY INDUSTRIES, INC., Tokyo 103 (JP)
(72) Inventor: Odagiri, Nobuyuki, Otsu-shi Shiga-ken, 520 (JP); Suzue, Shigeru Atsuta-ryo, Nagoya-shi Aichi-ken 457 (JP); Kishi, Hajime 6-1-723 Mukaijima-danchi, Kyoto-shi Kyoto-fu, 612 (JP); Nakae, Takeji, Otsu-shi, 520-21 (JP); Matsuzaki, Akimitsu, Otsu-shi Shiga-ken 520 (JP)
(74) Representative: Paget, Hugh Charles Edward

(56) References cited:
- EP-A- 0 058 141
- EP-A- 0 252 725
- FR-A- 2 566 416
- US-A- 4 604 319
- PATENT ABSTRACTS OF JAPAN, vol. 9, no. 245 (M-418)[1968], 31 May 1985

## Description

The present invention relates to advanced composite materials and prepregs used for structures required to be high in strength, elastic modulus and also in the specific strength and specific elastic modulus calculated by dividing the strength or elastic modulus by specific gravity.

In more detail, it relates to composite materials and prepregs remarkably enhanced in strength in directions other than the directions of reinforcing fibers, particularly in the tensile strength in such directions, inter-layer strength, inter-layer toughness, and also in impact resistance and fatigue resistance.

Advanced composite materials are inhomogeneous materials having reinforcing fibers and matrix resins as essential components. Consequently, there is a great difference between the properties in the direction of the fibre axes and those in any other direction. For example, the resistance to drop weight impact is governed by the delamination strength, and it is known that the strength of the reinforcing fiber may be improved but not by a great amount. Thus, for the purpose of improving the physical properties, improvements by various methods, including improvement of the toughness of the matrix resin, have been proposed.
(1) In USP 3,472,730 (1969), improvement in the delamination strength is disclosed by providing a separate exterior film comprised of an elastomer modified thermosetting resin on one or both surfaces of a fiber reinforced sheet.
(2) In Patent Disclosure SHO 51-58484 (Patent Publication SHO 58-31296), improvement in the moldability and bending strength is disclosed by having a polyester sulfone film present on the surface of a fiber-reinforced epoxy resin prepreg.
(3) In Patent Disclosures SHO 54-3879, SHO 56-115216 and SHO 60-44334, improvement in the delamination strength using short fiber chips, chopped strands and milled fibers arranged between the layers of a fiber-reinforced sheet is disclosed.
(4) In Patent Disclosure SHO 60-63229, improvement in the delamination strength is disclosed using an elastomer modified epoxy resin film arranged between the layers of a fiber-reinforced prepreg.
(5) In USP 4,539,253 (1985) (corresponding to Patent Disclosure SHO 60-231738), improvement in the delamination strength is disclosed by providing between the layers of a fiber-reinforced prepreg a film having an elastomer modified epoxy resin impregnated in a non-woven fabric, woven fabric, mat or carrier composed of short fibers as a base material.
(6) In USP 4,604,319 (1986) (corresponding to Patent Disclosure SHO 60-231738), improvement in the delamination strength using a thermoplastic resin film disposed between the layers of a fiber-reinforced prepreg is disclosed.

These methods are unsatisfactory in their results and have shortcomings. In the case of using a separate exterior film containing an elastomer modified thermosetting resin, the heat resistance decreases with an increasing content of elastomer and so the effect of improving the delamination strength is incompatible with an improvement in the heat resistance.

Where a thermoplastic resin film is used, both the heat resistance and the improvement in the delamination strength are achieved through use of a thermoplastic resin film of good heat resistance, but the tackiness which is an advantage of the thermosetting resin is generally lost. Further, the thermoplastic resin has its general defect of poor solvent resistance reflected in the composite material.

Also, use of short fiber chips, chopped strands or milled fibers increases the inter-layer thickness, resulting in decrease of the strength of the composite as a whole.

The present invention provides a prepreg consisting of fiber reinforced resin having as a separate phase fine resin particles distributed throughout the prepreg. The prepregs can be laminated to form a fiber reinforced laminate.

It should be mentioned at this stage that EP-A-058141 and Patent Abstracts of Japan, Vole 9, No 245, both describe composite materials comprising resin-impregnated fibers in which particles are incorporated. We have found, however, that, as compared with fiber reinforced resin having particles evenly distributed throughout the material, further remarkable advantages are achieved if the particles are substantially confined within areas at the sides of the prepreg. When the prepregs are laminated to form a fiber reinforced laminate, the particles are then localised in zones which may be called inter-layer zones, i.e. zones which lie at the edges of the lamination layers. The prepregs may be stacked and laminated by themselves or, particularly where the particles are positioned near each surface, stacked alternately with prepregs devoid of such particles.

The fibres used are reinforcing fibers, for example, 5 cms or more in length, and the matrix resin for these fibers must be a thermosetting resin or a mixture of a thermosetting resin and a thermoplastic resin.

Thus, considering the laminated material, the invention provides a laminated composite material having lamination layers comprising
(i) reinforcing fibers mixed with a matrix resin which is a thermosetting resin or a mixture of a thermosetting resin and a thermoplastic resin; and
(ii) fine resin particles distributed as a separate phase in a matrix resin, at least 90% of these particles being localised in inter-layer zones, i.e.zones which lie at the edges of the lamination layers and which zones have a thickness which is not more than 30% of the thickness of the lamination layer.

The resin particles are preferably thermoplastic resins, but they may be thermosetting resins or a mixture of thermoplastic and thermosetting resins and in any event are not rubber polymers. A further desirable feature is that the "border length factor" (as explained later) of the component [C] in the interlayer zones is 2.5 or more.

The invention also provides a prepreg suitable for making the aforesaid laminated material, the prepreg being constituted by reinforcing fibers mixed with a matrix resin which is a thermosetting resin or a mixture of a thermosetting resin and a thermoplastic resin, and the aforesaid fine resin particles distributed in a matrix resin, at least 90% of the particles being localised in a zone or zones at one or both sides of the prepreg, the total thickness of the or each zone being 30% of the thickness of the prepreg.

In the accompanying drawings
Figs. 1, 2 and 3(a) are microphotographs by a scanning electron microscope showing the cross-section of the composite material obtained in Example 1, magnified to 70 times, 200 times and 1000 times respectively, in which the particles are dyed separately.
Figs. 4, 5 and 6(a) are scanning electron microphotographs showing the cross-section of the composite material obtained in Example 2, magnified to 70 times, 200 times and 1000 times, respectively.
Fig. 7 is a scanning electron microphotograph of the cross-sectional structure of the composite obtained in Example 3, in which the particles are not dyed.
Figs. 8 to 13 are schematic illustrations of prepreg preparation processes of the present invention.
Figs. 14(a) and 15(a) are scanning electron microphotographs of the composite of Examples 7 and 11, respectively.

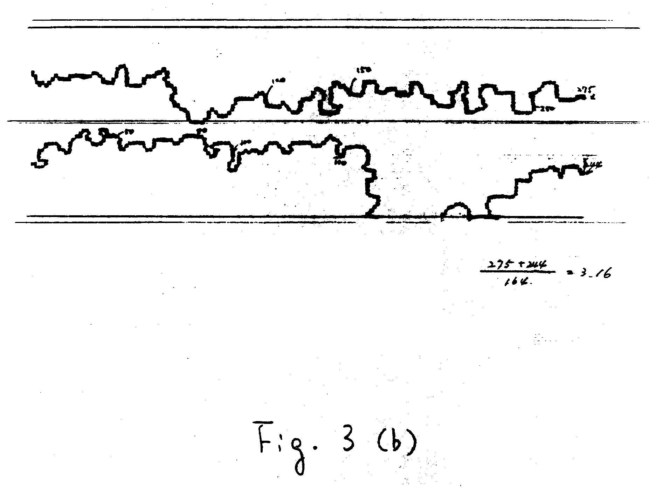

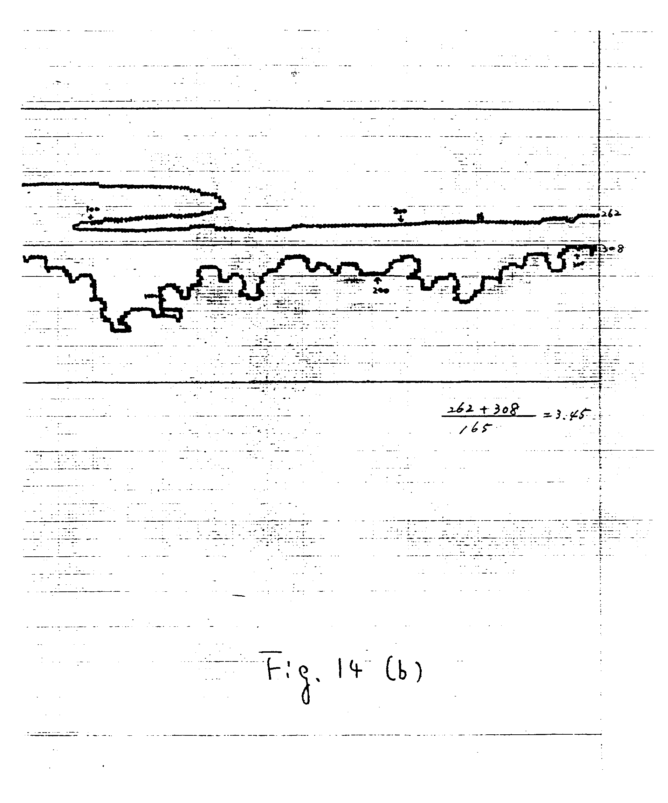

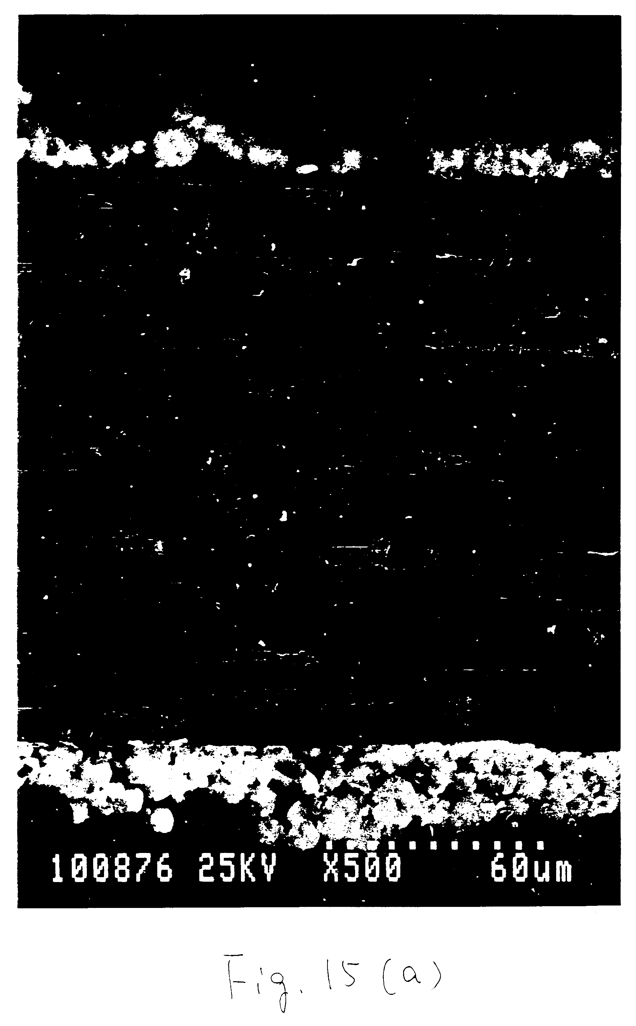

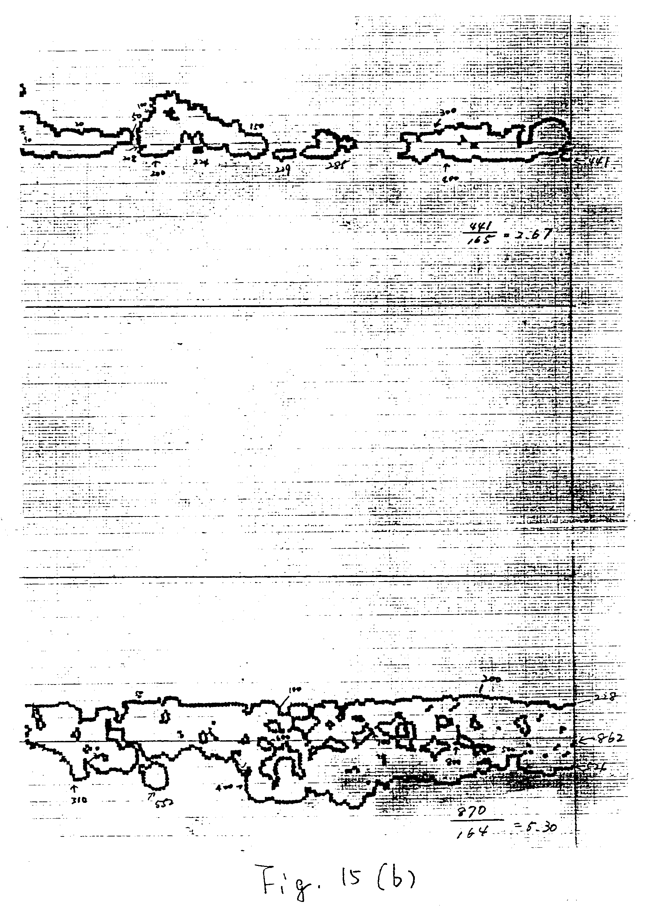

Figs. 3(b), 6(b), 14(b) and 15(b) are dotted (smeared out) papers used for determination of the "border length factor" of the composites of Figs. 3(a), 6(a), 14(a) and 15(a), respectively.

The prepreg and laminate of the invention are made up from components [A], [B] and [C].

The component [A] of the present invention is reinforcing fibers. Suitable reinforcing fibers for use in the present invention are those with good heat resistance and tensile strength generally used as high performance reinforcing fibers. They can be selected, for example, from carbon fibers, graphite fibers, aramide fibers, silicon carbide fibers, alumina fibers and boron fibers. Of these, carbon fibers and graphite fibers with good specific strength and specific elastic modulus and considerably contributing to the reduction of weight are most preferable in the present invention. All kinds of carbon fibers and graphite fibers can be used in respective applications, but high strength, high ductility carbon fibers of 450 kgf/mm² (4.41 GPa) or more in tensile strength and 1.6% or more in tensile strain are most suitable. Fibers for reinforcing purposes should be of adequate length and those of 5 cm or more in length are preferable. If they are shorter than 5 cm, it is difficult to sufficiently maintain the strength of the reinforcing fibers in the composite material. The carbon fibers or graphite fibers can also be mixed with other reinforcing fibers for use. The reinforcing fibers are not restricted in form or arrangement. For example, fibers in a single direction or random directions in the form of a sheet, a mat, a woven fabric or braided ropes can also be used. For applications requiring high specific gravity and high specific elastic modulus, reinforcing fibers aligned in one direction are most suitable, but fibers arranged in the form of a cloth (woven fabric) easy to handle are also suitable in the present invention. The fibers used are referred to in the following description as long fibers.

The component [B] of the present invention is a matrix resin.

The matrix resin used in the present invention can be a thermosetting resin or a mixture of a thermosetting resin and a thermoplastic resin.

The thermosetting resin used in the present invention is not especially restricted, as long as it is a resin which is set by an external energy such as heat, light, electron rays, etc., to form at least partially a cross-linked material. A preferable thermosetting resin is an epoxy resin, and in general, it is used in combination with a curing agent or curing catalyst.

An epoxy resin suitable for the present invention is obtained with an amine, phenol, or compound with carbon-carbon double bond as a precursor. One or more as a mixture of these epoxy resins can be used.

An epoxy resin can be preferably used in combination with an epoxy curing agent. The epoxy curing agent can be any compound with an active group capable of reacting with the epoxy group. Preferably, it can be selected from compounds with an amino group, acid anhydride group or azide group.

It is also suitable in the present invention to use a mixture of any of said thermosetting resins and a thermoplastic resin as said matrix resin. A thermoplastic resin suitable for the present invention is a thermoplastic resin with carbon-carbon bonds, amide bonds, imide bonds, ester bonds, ether bonds, carbonate bonds, urethane bonds, urea bonds, thioether bonds, sulfone bonds, imidazole bonds or carbonyl bonds in the main chain.

These thermoplastic resins can be polymers available commercially, or oligomers of lower molecular weight than these commercially available polymers. As the oligomers, it is preferable to use an oligomer with functional groups capable of reacting with the thermosetting resin at the ends of or in the molecular chain.

It is also possible to add a small amount of inorganic particles such as fine silica powder or elastomer to the epoxy resin.

Furthermore, the matrix resin can be selected from maleimide resin, resins with acetylene ends, resins with nadic acid ends, resins with cyanic ester ends, resins with vinyl ends and resins with allyl ends. Any of these resins can also be mixed with an epoxy resin or any other resin. It is also possible to use a reactive diluent, or a modifier such as a thermoplastic resin or elastomer, etc.

The maleimide resin is a compound containing an average of 2 or more maleimide groups at the ends. A preferable resin with cyanic ester ends is a cyanic ester compound of a polyhydric phenol, such as bisphenol A. A cyanic ester resin can be combined especially with bismaleimide resin, to provide a resin suitable for prepregs, and the BT resin made and marketed by Mitsubishi Gas Chemical Co., Inc. is suitable for the present invention. These resins generally have better heat resistance and water resistance than epoxy resins, but on the other hand, lower toughness and impact resistance, and therefore are used selectively in respective applications. In the present invention, even if any of these other thermosetting resins are used instead of epoxy resins, the results are the same. Resins with vinyl ends and resins with allyl ends can be selected from commercially available general purpose resins, but since they are inferior to the resins described above in heat resistance, they can be used mainly as diluents.

The component [C] consists of particles, referred to as fine particles in the description hereafter. The preferred size will be discussed below.

The component [C] can be any resin as long as it forms a phase separate from the component [B]. Usually, either a thermoplastic resin or a thermosetting resin, or a resin composed of both is preferable.

With regard to the distribution of the component [C], it is important for obtaining a composite material having excellent impact resistance that the component [C] is localized in the inter-layer zones of the composite material, and that the contact area with the component [B] is large.

When the component [C] is uniformly distributed, the expected effect of modification corresponds to the content of the component [C] in the matrix resin. However, if according to the present invention it is localized in the inter-layer zones of the composite material and if in particular it secures a wide contact area with the matrix resin and the reinforcing fibers, quite remarkable effects, far more than expected based on the simple additivity, are obtained, especially in the enhancement of impact resistance. Furthermore, the large contact area between the component [C] and the other components is effective, unexpectedly, also for enhancing the fatigue resistance.

The conditions for obtaining the above effect are that 90% or more of the component [C] exists in the portions close to the boundaries between lamination layers of the composite material and is localized within the range defined by 30% of the thicknesses of respective layers (this range is defined as an "inter-layer zone"), and preferably also that the value obtained by dividing the total length of the borders of the component [C] in contact with the component [B] or [A] in the average inter-layer zone on a cross section, by the layer direction length (this value is hereinafter defined as "border length factor") is 2.5 or more.

If a large amount of the component [C] exists beyond the inter-layer zones deep into the layers, therefore not conforming with said conditions, the impact resistance of the composite material is greatly lowered. On the other hand, if 90% or more of the component [C] is localized within the range defined by 10% of the thicknesses of layers from the surfaces of the layers, more preferable and remarkable effects can be obtained.

If the border length factor is less than 2.5, the composite material is not likely to be so enhanced in impact resistance or fatigue resistance. If the border length factor is 2.5 or more, both impact resistance and fatigue resistance are excellent. If the border length factor is 3.0 or more fatigue resistance is further enhanced. Preferably, the border length factor should be 3.5 or more. In measuring the border length factor, it is required that at least one portion in a cross section of the composite material satisfies the conditions, but preferably, portions corresponding to 30% or more of the whole, more preferably, portions corresponding to 50% or more of the whole, should satisfy the conditions.

The distribution of the component [C] in the composite material is evaluated as described below.

Firstly, the composite material is cut vertically across the lamination layers, and the cross-section is magnified to 70 times or more. Then, a photograph of 200 mm x 200 mm or more is prepared. The photograph should be taken with the face direction of layers parallel to one side of the photograph.

This cross-sectional photograph is used to obtain the average thickness of the layers. For the average thickness of the layers, the thicknesses of at least 5 lamination layers are measured at 5 or more randomly chosen places on the photograph, and the total value of the thicknesses is divided by the number of lamination layers.

Then, the cross-section of the same composite material is magnified to 500 times or more, to prepare a photograph of 200 mm x 200 mm or more. On the photograph, one inter-layer zone is selected, and a line is drawn almost at the center of the inter-layer zone.

Subsequently, two lines separated by 30% of the average thickness of layers obtained above and two lines separated by 50% of the average thickness are drawn symmetrically about the center line. The portion between the two lines separated by 30% of the average thickness of layers on the photograph is the inter-layer zone.

The area of the component [C] in the inter-layer zone and the area of the component [C] in the portion between the two lines separated by 50% of the average thickness of layers are determined, and their ratio is calculated, to obtain the amount of the component [C] existing in the inter-layer zone. The area of the component [C] is determined by cutting out all the portions of the component [C] in the predetermined zone from the cross-sectional photograph, and measuring them.

The border length factor is obtained as described below, using a 200 mm x 200 mm or more photograph magnifying a cross-section of the composite material to 500 times or more, as described above. Firstly, as mentioned above, one inter-layer zone is selected, and lines are drawn to identify the inter-layer zone. Then, on the photograph, tracing paper ruled into 1-millimeter squares is overlapped, and all the 1 mm squares on the border lines between the component [C] and the component [B] or [A] in the inter-layer zone are smeared out. The total number of squares smeared out is taken as the total length of the borders between the component [C] and the component [B] or [A]. This is divided by the layer direction length (mm) on the photograph to obtain the border length factor.

When it is difficult to visually distinguish the components [C] and [B], either of them is selectively dyed for observation. Observation can be done also by an optical microscope, but depending on the dye used, the use of a scanning electron microscope may be more suitable.

As the component [C] is localized in the inter-layer zones maintaining a large bonding area with the matrix resin, the internal stress generated when the fiber reinforced composite material is subjected to impact, etc. is eased, so as to retard the fracture under stress and to change from a brittle fracture mode to a highly tough fracture mode. This action of the component [C] is surmised to be achieved by the large allowable strain of the component [C] itself, its high adhesiveness to the matrix resin, and the long adhesive interface with the matrix resin based on the type of distribution therein.

Being in the form of fine particles, the component [C] is present in the matrix resin in a dispersed condition when it is admixed therewith, and apparently the matrix resin predominantly exhibits the characteristics of the matrix resin. Accordingly, tackiness and drapability are not required characteristics of the fine particles, so that the materials for the fine particles can be chosen from a wide range.

Consequently, resins which heretofore are hardly usable as a matrix resin, notwithstanding their excellent performance, are usable in the form of fine particles as a component constituting a matrix resin, so as to improve the performance thereof.

When, as in the present invention the fine particles are concentrated to a particular part of the matrix resin, the characteristics of the particular part are modified. In the case of a highly anisotropic material such as a composite material, it is unusual that a uniform stress occurs over the whole material. In most cases, the stress is concentrated in come particular part. Particularly, in the case of a fiber-reinforced composite material obtainable by laminating prepreg sheets, when it is subject to an external force such as an external impact, it is known that it has a large stress produced between the sheet or laminates. Then, when highly tenacious fine particles are distributed between the layers in a relatively high concentration, they provide an appreciable effect of improving the interlaminar tenacity.

For improvement of the interlaminar tenacity, it is disclosed in Patent Disclosure SHO 60-231738 to provide a clearly separate layer of film comprised mainly of a thermoplastic resin on one or both surfaces of the prepreg. But, with the fine particles used according to the present invention, it is not required to form such a separate layer. The internal stress occurring when a fiber reinforced composite material is subject to an impact, for example, is distributed in a direction perpendicular to the layer between the laminates. Here, by having the fine particles present along such a direction and not clearly separate, greater modifying and reinforcing effects will be provided.

The first feature of the composite material realized here is that the matrix resin is in the form of a hybrid of the matrix resin and fine particle component, in a sense that the component materials having unique properties are arranged at appropriate places.

Further, Patent Disclosure 60-231738 discloses a prepreg laminated with a film. However, this film-laminated prepreg has low tackiness and it is difficult to include a high content of reinforcing fiber in the prepreg because of the difficulties of making very thin interleaving films of an intended material. Here, the present invention is greatly different from said disclosure in that the distribution of the fine particles according to the present invention is entirely free from such problems.

For the distribution of the fine particles, it is important for providing a composite material with notable impact resistance that the fine particles are present in the surface layer of the prepreg, that is, partially between the prepregs when molded into a composite material.

With the normal addition of fine particles, the modifying effect is expected to an extent commensurate with the content of the fine particles in the matrix resin. But when the fine particles are partially localized in the surface layer of the prepreg, the modifying effect greatly exceeds the expected effect according to said mere addition, and a particularly notable effect beyond that expected is noted in the improvement in the impact resistance. The condition for satisfying this is that 90% or more of the fine particles are present locally within the range defined by a depth of 30% of the thickness of the prepreg from the prepreg surface. If the fine particles do not satisfy the foregoing condition and are deep inside the prepreg, the impact resistance of the composite material is inferior to that satisfying the above condition.

When 90% or more of the fine particles are localized within the range defined by a depth of 10% of the thickness of the prepreg from the prepreg surface, the effect is much more appreciable, and such is more preferable. The prepreg according to the present invention has the fine particles partially distributed in both surfaces of the prepreg and allows free lamination regardless of whether on the upper or lower surface of the prepreg and is, therefore, optimum. However, with prepregs having the fine particles distributed on one side only, a similar effect is obtainable if care is exercised in laminating the prepregs so that the fine particles are present between the prepregs, and so the partial distribution of the fine particles on one side of the prepreg is also included in the present invention.

Evaluation of the condition of distribution of the fine particles in the prepreg is made according to the following method.

Firstly, a prepreg is kept tight between two flat, smooth supporting plates. Then, raising the temperature gradually over many hours, it is hardened. Here, it is important to cause gelling at as low a temperature as practicable. If the temperature is raised before gelling occurs, the fine particles are apt to move, preventing evaluation of the exact distribution in the prepreg.

After gelling further time is allowed, to raise the temperature gradually and harden the prepreg. Then, using the hardened prepreg, its cross-section is magnified by 200 times or more, and a photograph of 200 mm x 200 mm or larger is taken.

Using this cross-sectional photograph the mean thickness of the prepreg is obtained by measuring the thickness at at least five places randomly chosen on the picture, and taking the mean value. Next, at the position of 30% of the thickness of the prepreg from the surface in contact with each supporting plate, a line is drawn parallel to the facial direction of the prepreg. Then, the area of the fine particles present between the surface in contact with the supporting plate and the 30% parallel line for each side of the prepreg and also the area of the fine particles present over the whole width of the prepreg are determined. By taking the ratio of the former to the latter, the quantity of the fine particles present within 30% of the thickness of the prepreg is calculated. Determination of the area of fine particles is carried out by cutting off all the parts with the fine particles present in a specified region as seen from the cross-sectional picture and measuring them. To eliminate the effect of partial variation in distribution of the fine particles, it is necessary to carry out such evaluation over the whole width of the picture obtained and, at the same time, to perform a similar evaluation of the pictures of five randomly chosen places and to take the mean value.

Where it is difficult to distinguish the fine particles from the matrix resin, either one should be selectively colored for observation. For observation, an optical microscope can be used, but depending on the coloring agent, a scanning type electron microscope may be more suitable.

The component [C] has to be fine particles of a thermoplastic or thermosetting resin or both as a material.

The thermosetting resin used as fine particles refers to all resins which harden by an external energy source such as heat, light or electron beam, to form at least partially a cross-linking body or have such cross-linking bodies formed.

Use of a thermoplastic resin for the fine particles is also preferable for the present invention. Preferable thermoplastic resins to be used in the form of the fine particles according to the present invention are the thermoplastic resins having in the main chain a carbon-carbon bond, amide bond, imide bond, ester bond, ether bond, carbonate bond, urethane bond, urea bond, thioether bond, sulfone bond, imidazole bond or carbonyl bond. Specifically, there may be cited vinylic resins such as polyacrylate, poly (vinyl acetate) and polystyrol, thermoplastic resins belonging to the engineering plastics group such as polyamide, polyaramid, polyester, polyacetal, polycarbonate, poly (phenylene oxide), poly (phenylene sulfide), polyallylate, polybenzimidazole, polyimide, polyamideimide, polyetherimide, polysulfone, polyethersulfone and polyetheretherketone, hydrocarbon resins such as polyethylene and polypropylene and cellulose derivates such as cellulose acetate and cellulose lactate.

Particularly, polyamide, polycarbonate, polyacetal, poly(phenylene oxide), poly(phenylene sulfide), polyallylate, polyester, polyamideimide, polysulfone, polyethersulfone, polyetheretherketone, polyaramid and polybenzimidazole have notable impact resistance and are suitable as a material for the fine particles used according to the present invention. Of these, polyamide, polyethersulfone and polysulfone are highly tenaceous and heat resistant and are preferable for the present invention. Tenacity of polyamide is particularly notable, and by using a polyamide belonging to the non-crystalline transparent nylon group, heat resistance is provided concurrently.

As the fine particles, the use of a thermosetting resin and a thermoplastic resin as a mixture is also suitable. The thermosetting resin and thermoplastic resin in this case can be preferably selected from those listed above. For example, if a mixture of a phenol resin and a nylon resin is used, the water absorption coefficient of the nylon resin can be lowered to raise Tg, with the toughness of nylon resin kept, and thus, the component [C] can have excellent heat resistance and water resistance.

The expression "Constituent Unit [C]" used herein denotes a fine resin powder which is produced from a combination of a thermosetting resin and a thermoplastic resin and which has, or can develop, a semi-IPN structure. Here, IPN is an abbreviation of interpenetrating polymer network, in which crosslinked polymers interpenetrate each other to form a network. On the other hand, the expression "semi-IPN" denotes an interpenetrating polymer network consisting of a crosslinked polymer and a linear polymer.

It is possible to obtain a fine powder which has a high solvent resistance and can achieve good adhesion to the matrix resin while maintaining the toughness of the particles themselves if the material has a semi-IPN structure consisting of an appropriately selected composition of a thermoplastic resin and a thermosetting resin. Such a semi-IPN may be formed during the process of composite molding. If such material is used as Constituent Unit [C], composites made from the prepreg prepared from the material will have high impact resistance, solvent resistance and fatigue resistance.

The thermoplastic resins usable for preparing semi-IPN resin are the same thermoplastic resins as described above. Among them, polyamide, polyetherimide, polyethersulfone, and polysulfone are excellent in toughness and heat resistance, and with the thermosetting resins described hereinunder semi-IPN resin is easy to prepare.

Any thermosetting resin may be useful if it can form a semi-IPN structure with the thermoplastic resin to be used in combination. Specifically, major materials include epoxy resins, bismaleimide resins, phenolic resins, unsaturated polyester resins, and polyimide resins.

For semi-IPN fine powder composed of a thermoplastic resin and thermosetting resin, the content of the thermoplastic resin should be in the range of 30-99 weight percent. The fine powder becomes lower in solvent resistance as the content exceeds 99 percent, while at contents below 30 weight percent, the fine powder becomes lower in toughness, resulting in a composite of a decreased shock resistance. The content should preferably be in the range of 50-98 weight percent.

Unexpectedly, a very small weight percentage, 2 percent for instance, of a thermosetting resin can largely increase the solvent resistance and can sharply raise the fatigue resistance. On the other hand, fine powder of thermoplastic resin is considered to decrease in toughness as a result of the formation of a semi-IPN structure with a thermosetting resin and therefore, the resulting composite is generally expected to be lower in impact resistance as compared to the case where fine powder of thermoplastic resin is used alone. Contrary to this expectation, however, it has been found that the impact resistance can increase in the low range of weight percent of thermosetting resin. This may be attributed to an increase in adhesion between the fine powder and matrix resin resulting from the formation of a semi-IPN structure.

If the fine powder selected for Constituent Unit [C] has, or can develop, a semi-IPN structure consisting of a polyamide and an epoxy resin, the final composite will have well-balanced properties with respect to the impact resistance, solvent resistance, fatigue resistance and heat resistance. In addition, it has also been found that the creep properties, which represent a major disadvantage resulting from the application of a thermoplastic resin to the construction of structural material, are improved by the formation of a semi-IPN structure.

The material resin for fine particles should preferably have a strain energy releasing rate G_{lc} of 1500 J/m² or higher or, more preferably, 3000 J/m² or higher. [A G_{IC} value less than 1500 J/m² is not preferable in that the final composite material will not have a sufficient impact resistance.]

G_{IC} of the fine particles is evaluated by molding the particles into a plate and according to the compact tension method specified in ASTM E399 (Type A4), or double torsion method.

Heretofore, it was considered to be necessary for improving the impact resistance of the fiber reinforced composite materials to enhance the strain energy releasing rate (G_{IC} value) of the matrix resin. However, to realize the higher strain energy releasing rate, the characteristics which the matrix resin should have, such as, for example, elastic modulus, rupture elongation, heat resistance, water resisting properties, adhesive properties, tackiness, softness at room temperature and melt flow of the resin, were impaired considerably, and there was a limit for satisfaction of all of these. But, according to the present invention, by merely having a resin of a certain level of G_{lc} or higher present in the form of fine particles between the layers, the impact resistance of a composite material could be greatly improved.

The component [C] may take any form. It may be in the form of a powder, provided by pulverizing a block of resin, or fine particles obtainable by spray drying or a reprecipitation method. It may also be in the form of a milled fiber having the filaments cut short, or needles or whiskers. However, a spherical form is more preferable.

The fine particles are blended in the matrix resin for use, and so the matrix resin having the fine particles blended presents a viscosity higher than that having no fine particles blended.

Normally, a prepreg is produced by first preparing a resin film, having a resin applied to a release paper in a uniform thickness at a predetermined weight per unit area, then transferring and impregnating it into a reinforcing fiber. Here, to prepare this resin film, it is necessary that the resin has its viscosity reduced to a viscosity allowing application to the release paper at a temperature lower than that at which hardening of the resin takes place.

Then, if the matrix resin has its viscosity increased greatly by blending the fine particles, it becomes very difficult to produce the prepreg. Consequently, there is a limit to the amount of fine particles which can be blended.

Also, when the size of the fine particles is reduced, the surface area thereof increases, thus increasing the viscosity of the matrix resin. Therefore, depending on the quantity of fine particles, there is a limit to the usable size of the fine particles. However, it is found that according to the present invention such difficulties can be resolved, as the elevation of the viscosity of the matrix resin is greatly suppressed by having the fine particles formed spherically.

For the fine particles, those of indefinite shape, formed by mechanical crushing, are usually readily available. But when compared with the viscosity increase when fine particles of indefinite shape are blended, the viscosity increase using spherical fine particles is less than 1/2. Thus, in producing a prepreg, use of spherical fine particles provides a very significant effect, in that the restrictions for the amount and the size of the fine particles are reduced. Further, that the fine particles of smaller size can be introduced into the prepreg at a high content provides an additional effect of being able to reduce the disturbance of the fiber orientation due to the presence of the fine particles. This contributes greatly to the development of an unexpectedly high strength in the direction of the fiber orientation and stable composite properties of little variation.

The size of a fine particle is expressed in terms of the particle diameter, and in this case, the particle diameter means the volume mean diameter obtained by, for example, the centrifugal sedimentation rate method.

The diameter of the fine particle may vary according to the intended pattern of distribution.

As it is desired to dispose the fine particles towards the surface of rather than inside the prepreg, a particle diameter within the range 0.1 µm to 150 µm or, more preferably, 2 µm to 60 µm is suitable, depending on the type and orientation of the reinforcing fiber and the method of producing the prepreg. When the matrix resin including fine particles of a diameter within said range is impregnated into the reinforcing fiber, the fine particles are excluded from the clearance between the filaments of the reinforcing fiber and are distributed in a higher concentration towards the surface of the prepreg. If the fine particles take a greatly anisotropic form such as milled fibers, needles or whiskers, they may be of smaller diameter but they hardly penetrate between the filaments and are excluded towards the surface of the prepreg.

If, however, in the process of producing a prepreg, a method of introducing the fine particles by independent application is used, the fine particles stick to the surface of the prepreg, and so the particle diameter is not specifically limited.

If the fine particles have a diameter exceeding 150 µm, they tend to disturb the orientation of the reinforcing fiber filaments or increase more than required the thickness between the layers of the composite material obtained by lamination and thus deteriorate the physical properties of the composite material. Fine particles may be used which have a diameter exceeding 150 µm if they are of a material which partially dissolves in the matrix resin during the process of molding and thus have their diameter reduced or undergo deformation with heat during the molding. The fine particles may have their initial shape maintained or lost after molding, with advantages and disadvantages in both cases, and either is applicable depending on the purpose. When the fine particles are of a thermosetting resin, there is little difference in the effect between these cases. But when they are of a thermoplastic resin a difference as described below in the effect is produced, and this difference is particularly noticeable in the case of a structure having the fine particles highly concentrated in a particular region such as between the laminates of the composite material.

When the initial shape is maintained, the fine particles of the thermoplastic resin composition are independently dispersed, so that the shortcomings of the thermoplastic resin, that is, deterioration upon contact with an organic solvent and creep under a continuous load, do not appear over the matrix resin, and there is provided a composite material which has notable resistance to solvent as well as creep. However, if the fine particles have little affinity to the matrix resin, separation of the fine particles and the matrix resin occurs when a stress is produced, and this may become a shortcoming of the material. In this sense, some partial co-solubility or reactivity between the matrix resin and the fine particles is desirable.

On the other hand, when the fine particles lose their initial shape after molding, the fine particles of thermoplastic resin composition integrate to some extent to form a continuous phase, and so deterioration in the solvent or creep resistance is apprehended. However, if the adhesion between the matrix resin and the fine particles is sufficiently strong, there is provided a good composite material free from separation of both components under a stress.

The quantity of the component [C] is preferably within the range 1 to 100 parts by weight to 100 parts by weight of the matrix resin. When it is less than 1 part by weight, the effect of the fine particles is negligible, and when it is over 100 parts by weight, blending with the matrix resin becomes difficult, and further the tackiness and draping property of the prepreg are greatly reduced. Particularly, for use for the purpose of retaining the rigidity of the matrix resin, for development of the compressive strength of the composite material and improving the interlaminar fracture toughness of the composite material with fine particles and the characteristics of high rupture elongation and flexibility, a smaller quantity, within the range 1 part by weight to 30 parts by weight, is rather preferable.

Any prepreg production process may be used, but one of the following three methods is preferable.

Firstly, a mixture of component [B], the matrix resin, and component [C], the fine powder, is prepared and then combined with a prepreg made up of component [A], the reinforcing fiber made up of long fibers, and component [B].

There are no special requirements for the preparation of a prepreg from a reinforcing fiber and a matrix resin and any conventional prepreg preparation method can be used. For example, a prepreg may be prepared by attaching resin-coated sheets to both sides of a sheet composed of reinforcing fiber strips placed parallel to each other and then applying heat and pressure to the layered body between impregnating rollers to allow the reinforcing fiber to be impregnated with the resin transferred from the resin-coated sheets (hot-melt process). In another process, a sheet composed of parallel reinforcing fiber strips is immersed in a resin solution diluted with an appropriate solvent and the sheet is then taken out and heated to remove the solvent partially or completely (wet process).

There are two processes for preparing a mixture of a matrix resin and a fine powder. In one, a matrix resin and a fine powder are mixed in a stirring machine such as a kneader and then spread over the surface of a release paper, etc., to form a resin-coated film containing fine powder, while in another process, a film coated with the matrix resin is prepared first and then a fine powder is dispersed over it by an appropriate method. For a powder with a large particle size the latter process is preferable because it is difficult to produce a thin coated film by the former process. There are no special requirements for the process of preparing a resin-coated film and any conventional coating process may be used.

To combine the prepreg composed of reinforcing fibers and matrix resin with the coated film made up of matrix resin and fine powder, the coated film may be simply attached to one side or both sides of the prepreg, or impregnating rollers etc. may be used further to apply heat and pressure to the sheet formed above to allow the prepreg to be impregnated to an appropriate degree. It is also possible to control the tackiness of the surface of the prepreg by adjusting the degree of impregnation.

The second method is a method of first preparing a mixture of the component [B], the matrix resin, and the component [C], the fine particles, then combining the mixture with the component [A], the reinforcing fiber comprised of long filaments.

For preparation of the mixture of matrix resin and fine particles, two methods are available: one is to first mix the matrix resin and fine particles in a stirrer such as a kneader, then coat the mixture onto a release paper to provide a resin coating film having the fine particles incorporated; and the other is to first prepare a coating film of matrix resin then spread the fine particles thereover by an appropriate method. When the fine particles are of large diameter, the latter method is preferable, since according to the former method it is difficult to prepare a thin coating film. The method of producing a resin coating film is not particularly limited, and all of the coating methods heretofore known are applicable.

The method of combining the resin film comprised of fine particles and matrix resin with the reinforcing fiber, or the method of impregnation, is also not limited specifically, and all of the methods of impregnation of the hot melt type heretofore known are applicable. In this case, the fine particles are filtered by the fiber and are thus confined to the prepreg surface layer.

The third method of production is that which is characterized by bonding the component [C] to one or both surfaces of a prepreg comprised of the components [A] and [B].

According to this method of the invention, a prepreg comprised of the components [A] and [B] is first produced by a generally known method. Such a method is not particularly limited, and the so-called hot melt or wet method is usable.

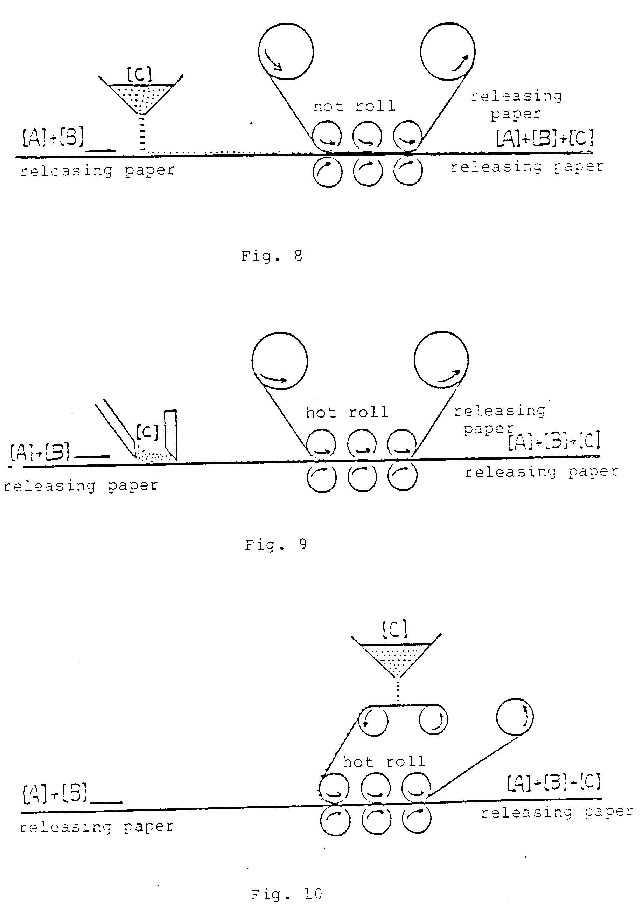

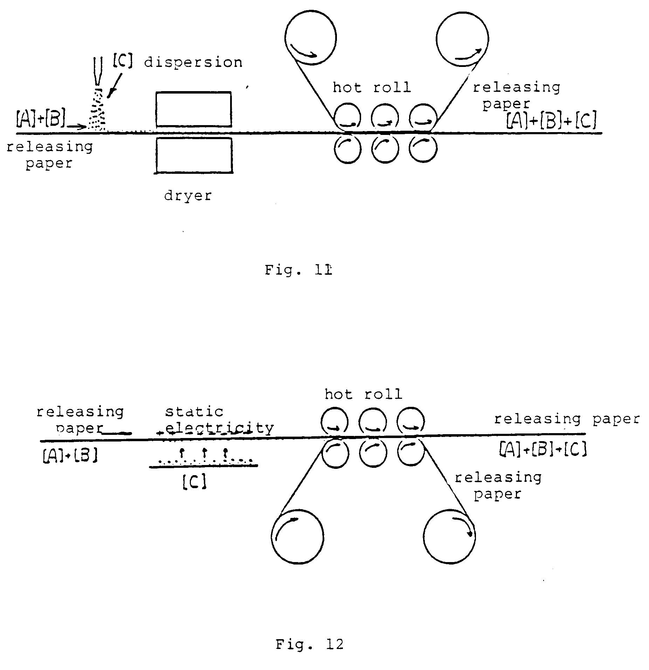

According to this method, the component [C], the fine particles comprised of a resin as a material, is then bonded to one or both surfaces of the foregoing prepreg. A conventional method of bonding the fine particles flatly and evenly is generally used. As a particularly preferable method for bonding the fine particles to the prepreg, any of the following methods is usable, viz: (1) spreading the fine particles over the prepreg with a spreader (Fig. 8), (2) spreading the fine particles over the prepreg then allowing the prepreg to pass through a clearance of a specified spacing (Fig. 9), (3) bonding the fine particles onto a release paper or film similarly to method (1) or (2), then pressing the paper or film to the prepreg to integrate them (Fig. 10), (4) dispersing the fine particles in a solvent and applying the dispersed liquid to the prepreg, then drying to remove the solvent (Fig. 11), and (5) bonding the fine particles to the prepreg using static electricity (Fig. 12).

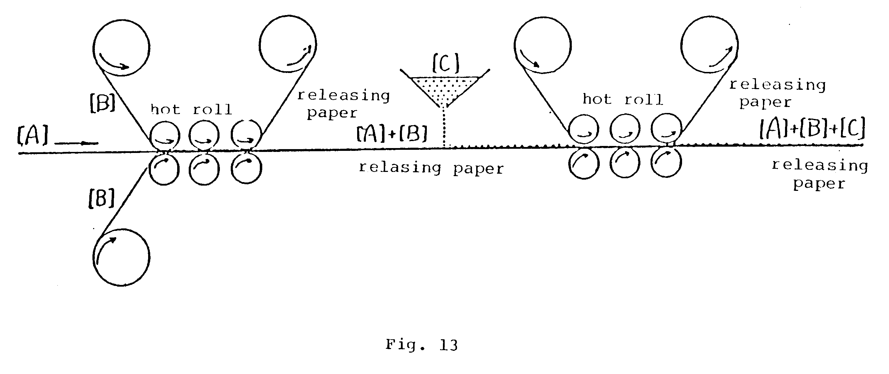

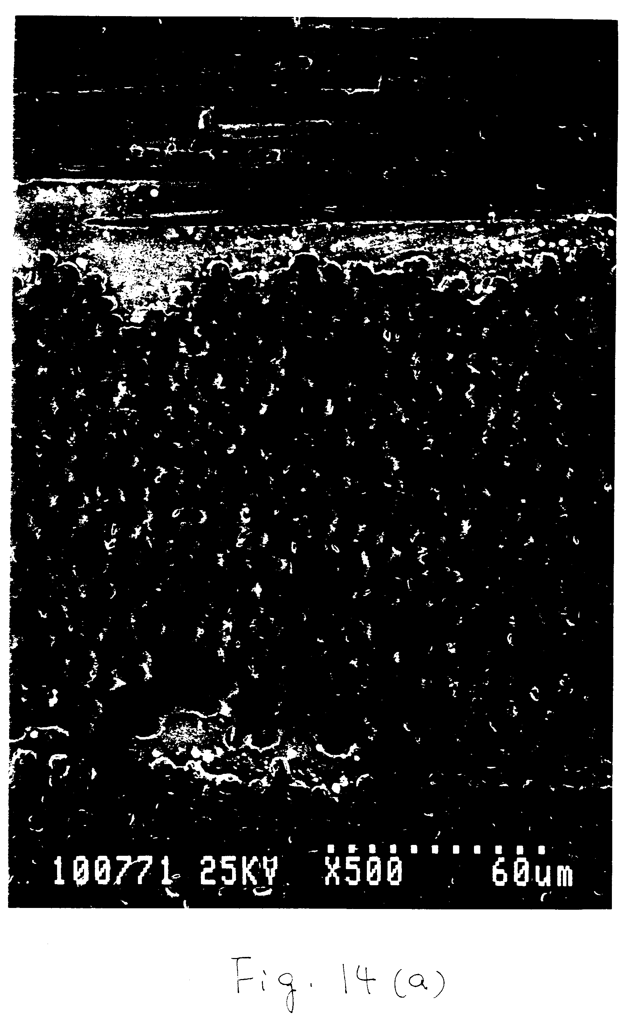

The fine particles may be bonded to one or both surfaces of the prepreg. A method of successively carrying out the production of a prepreg and the bonding of fine particles for improvement of the production efficiency is schematically shown in Fig. 13.

### Example 1

A unidirectional prepreg composed as described below was prepared. Firstly, a prepreg consisting of the following A and B components and containing 21 wt % of resin was prepared, and a resin film obtained by thinly coating release paper with a blend resin of C and B was applied to both sides. The following amount of C is the amount of particles contained in the prepreg resin obtained from the above two steps.
A. Reinforcing fibers: Carbon fibers T800H (made by Toray Industries, Inc.)
B. Matrix resin: A resin composition composed of the following:
   1) Tetraglycidyl diaminodiphenylmethane (ELM434 made by Sumitomo Chemical Co., Ltd.) - 70 parts by weight
   2) Bisphenol A-type epoxy resin (Epikote 828 made by Yuka Shell Epoxy K.K.) - 10 parts by weight
   3) Bisphenol F-type epoxy resin (Epicron 830 made by Dainippon Ink & Chemicals, Inc.) - 20 parts by weight
   4) 4,4'-diaminodiphenylsulfone (Sumicure S made by Sumitomo Chemical Co., Ltd.) - 45.2 parts by weight
C. Amorphous transparent nylon (Particles of 22 µm average grain size obtained by freezing and pulverizing Trogamido T made by Dinamit Nobel) - 15 parts by weight
The resin content in the prepreg was 30 wt %. The amount of resin was 69 g/m² and the amount of carbon fibers was 149 g/m².

Then, 32 sheets of the prepreg were quasiisotropically laminated and molded in an ordinary autoclave at 180°C for 2 hours at a pressure of 6 kgf/cm² (588 kPa).

A section of the molded product was ground, and the amorphous transparent nylon portions were selectively dyed by osmium tetroxide. The cross-section was observed with a scanning electron microscope. The amorphous transparent nylon had formed layers separate from the matrix resin.

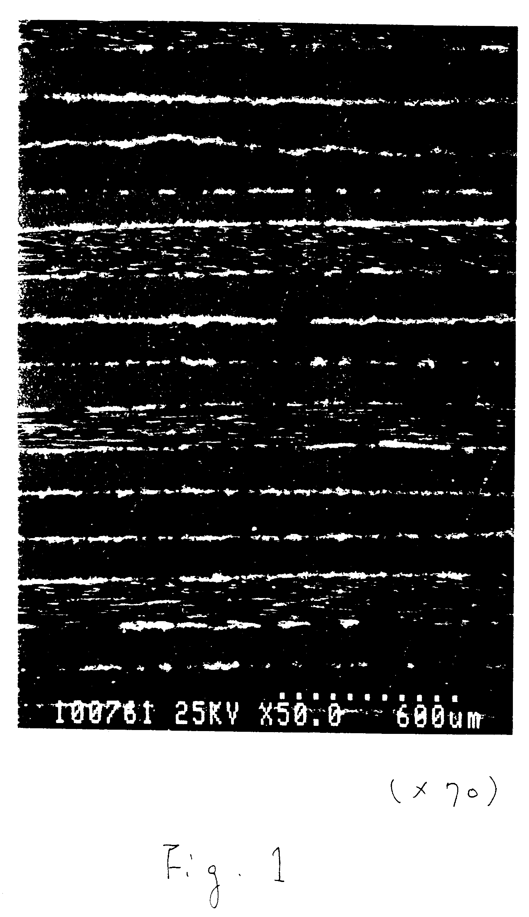

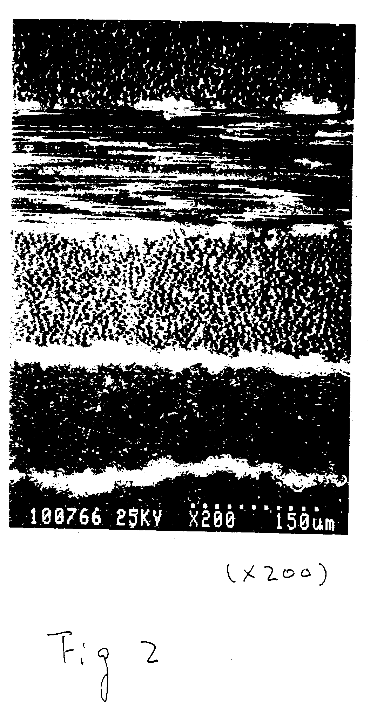

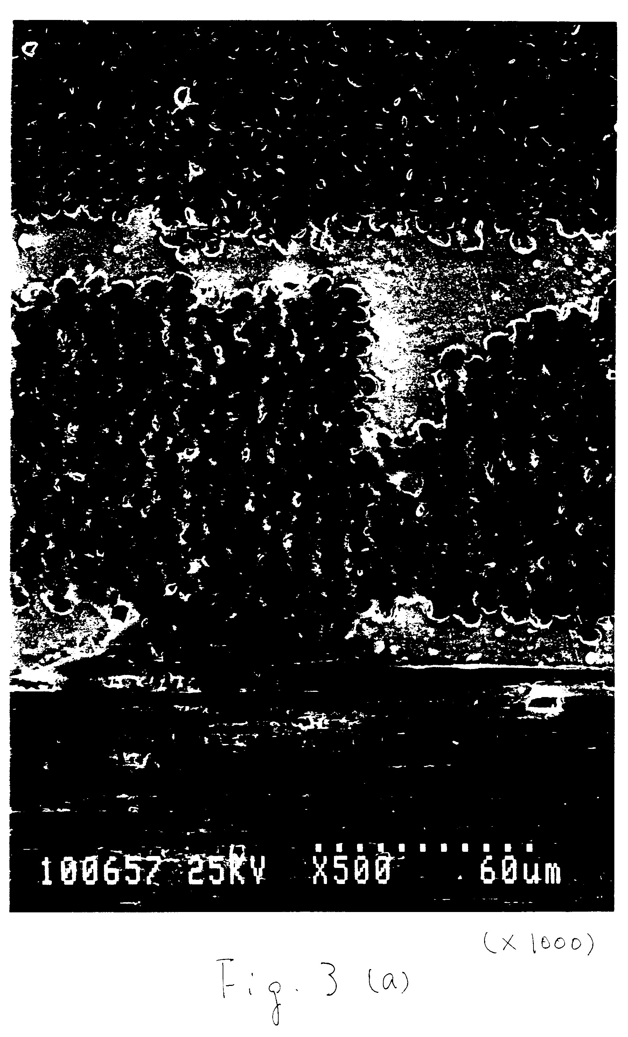

The average thickness of the layers was evaluated using five photographs magnified to 70 times and another five magnified to 200 times, and was found to be 156 µm. Two of the cross-sectional photographs used are shown in Fig. 1 (70-fold) and Fig. 2 (200-fold). The amorphous transparent nylon was rather bright on the photographs, in contrast to the matrix resin. Then, five cross-sectional photographs showing chosen portions magnified to 1000 times were used to evaluate the amount of amorphous transparent nylon existing in the inter-layer zones. The amount was 97% (the average width of the inter-layer zones was 46.8 µm), showing that the amorphous transparent nylon had been localized in the inter-layer zones. The same cross-sectional photographs were used to obtain the border length factor, which was found to be 3.16, showing that the contact area was large. One of the cross-sectional photographs used is shown in Fig. 3 (1000-fold).

The hardened quasi-isotropic plate was cut into 150 mm x 100 mm specimens, and a drop weight impact energy of 1500 inch-pounds/inch (66.7 J/cm) was applied to the center of each specimen. The damaged area measured by an ultrasonic flaw detector was 1.2 square inches (7.7 cm²). After the impact test, the compressive strength was measured according to ASTM D-695 and found to be 30.3 kg/mm² (297 MPa).

Fatigue resistance was evaluated by applying a repeated load (tension) in the EDS (edge delamination strength) test mode. As a result, at a stress of 15 kg/mm² (147 MPa), peeling was not caused even by the load repeated 10⁶ times.

### Example 2

A unidirectional prepreg composed of the following was prepared as in Example 1.
A. Reinforcing fibers: Carbon fibers T800H (made by Toray Industries, Inc.)
B. Matrix resin: A resin composition composed of the following:
   1) Tetraglycidyl diaminodiphenylmethane (ELM434 made by Sumitomo Chemical Co., Ltd.) - 60 parts by weight
   2) Bisphenol A-type epoxy resin (Epikote 828 made by Yuka Shell Epoxy K.K.) - 20 parts by weight
   3) Trifunctional aminophenol-type epoxy resin (ELM100 made by Sumitomo Chemical Co., Ltd.) - 20 parts by weight
   4) 4,4ʹ-diaminodiphenylsulfone (Sumicure S made by Sumitomo Chemical Co., Ltd.) - 47.3 parts by weight
   5) Polyether sulfone 5003P (made by Mitsui Toatsu Chemicals, Inc.) - 16 parts by weight
C. Nylon 6 grains (SP1000 made by Toray Industries, Inc., average grain size 8 µm) - 14 parts by weight
The resin content of the prepreg was 32 wt %. The amount of resin was 71 g/m² and the amount of carbon fibers was 148 g/m².

The prepreg was molded as in Example 1, and a cross-section of it was observed with a scanning electron microscope. Nylon 6 was dyed using phosphorus tungstic acid. Nylon 6 was bright on the photograph, and formed layers separate from the matrix resin.

The average thickness of the layers was evaluated as in Example 1 and was found to be 159 µm. The amount of nylon 6 existing in the inter-layer zones was 98%, and the border length factor was 4.3. Other portions showed border length factors of 3.18 and 2.82.

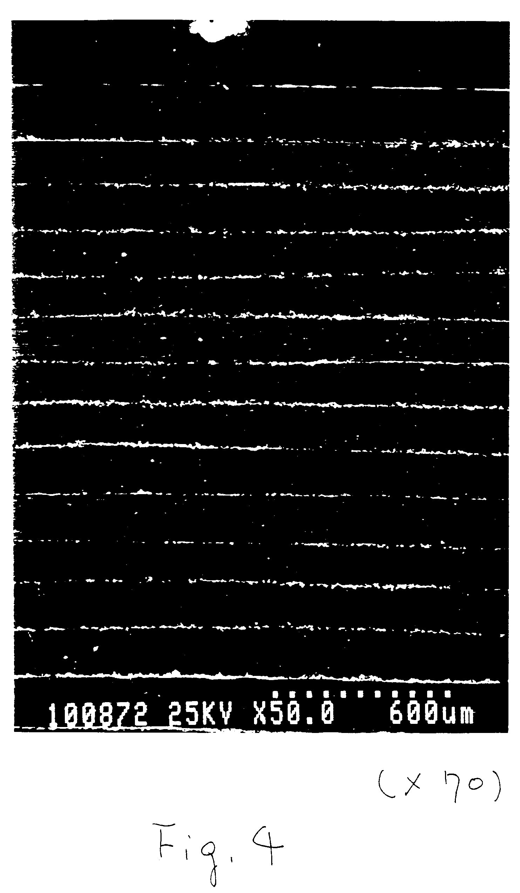

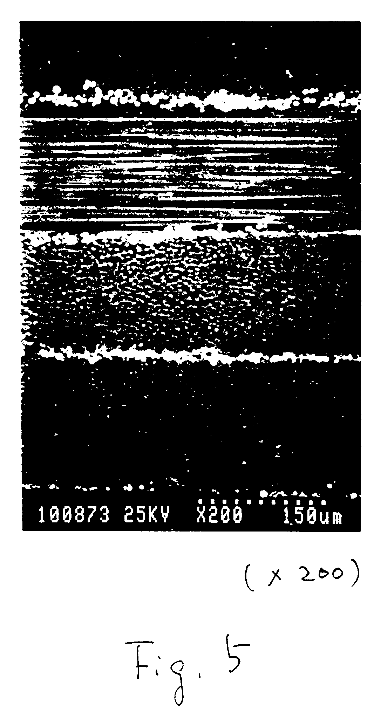

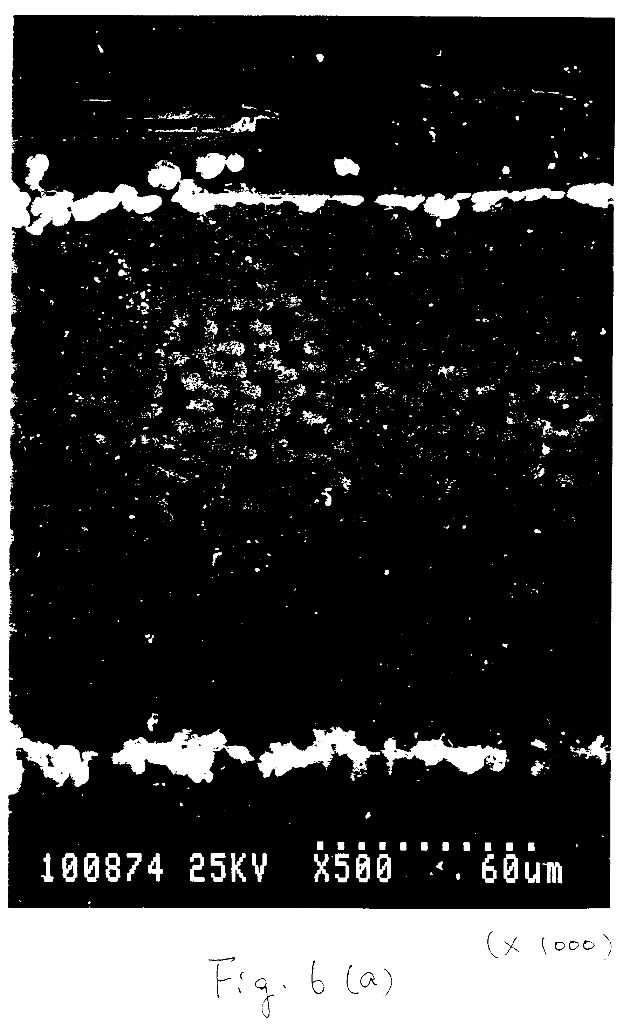

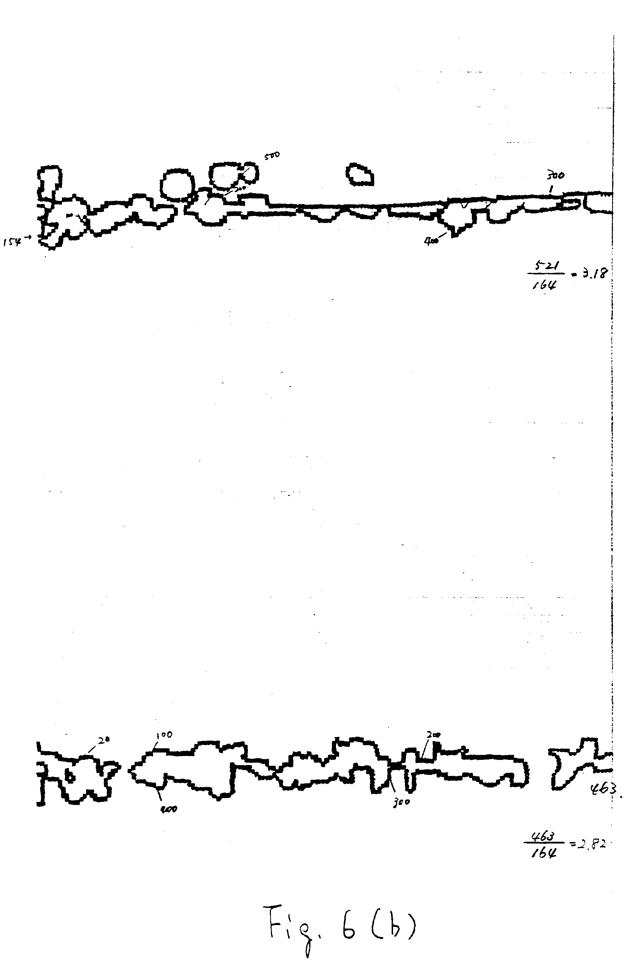

Three of the cross-sectional photographs used for evaluation are shown in Fig. 4 (70-fold), Fig. 5 (200-fold) and Fig. 6 (1000-fold).

The hardened quasi-isotropic plate was cut into 150 mm x 100 mm specimens, and a drop weight impact energy of 1500 inch-pounds/inch (66.7 J/cm) was applied to the center of each specimen. The damaged area was measured by an ultrasonic flaw detector and found to be 0.7 square inches (4.5 cm²). After the impact test, compressive strength was measured according to ASTM D-695, and was found to be 36.2 kg/mm² (355 MPa).

Then, the fatigue resistance was evaluated with a repeated load (tension) applied in the EDS (Edge Delamination Strength) test mode. As a result, at a stress of 15 kg/mm² (147 MPa), peeling was not caused even by the load repeated 10⁶ times.

### Example 3

A unidirectional prepreg of the following composition was prepared. The prepreg was produced by the method of first impregnating the matrix resin into the reinforcing fiber then spraying the fine particles onto both surfaces of the reinforcing fiber. The amount of matrix resin was 69 g/m², and the amount of carbon fiber was 152 g/m². The amount of fine particles was 5.2 g/m².

Here, it was confirmed through optical microscopic observation that the fine particles were evenly distributed on both surfaces of the prepreg.
(1) Reinforcing fiber - Carbon Fiber T800H (product of Toray).
(2) Base resin - Resin composition of the following components.
   1) Tetraglycidyldiaminodiphenylmethane (product of Sumitomo Kagaku Kogyo, ELM 434) - 90 parts by weight.
   2) Bisphenol F-type epoxy resin (product of Dainippon Ink Kogyo, Epicron 830) - 10 parts by weight.
   3) 4,4'-diaminodiphenylsulfone (product of Sumitomo Kagaku Kogyo, Sumicure S) - 35 parts by weight.
   4) Polyethersulfone 5003P (product of ICI) - 15 parts by weight.
(3) Fine particles - Nylon 12 particles, SP-500 (mean particle diameter, 7 µm; product of Toray).

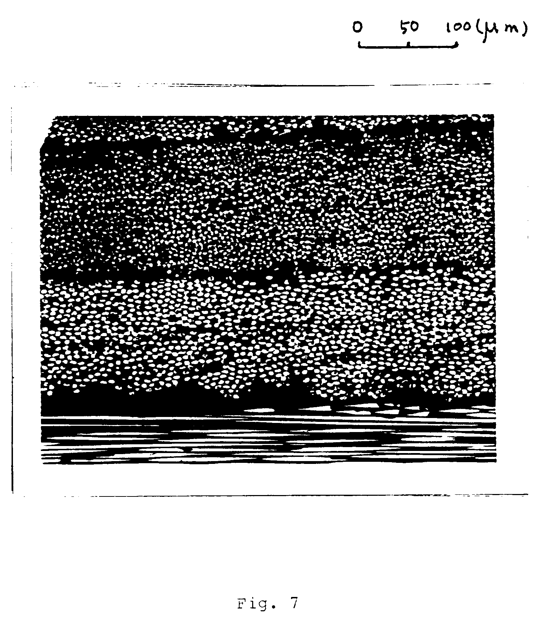

48 sheets of this prepreg were quasi-isotropically laminated, and the molding in an ordinary autoclave was carried out at 180°C for 2 hours under a pressure of 6 kgf/cm² (588 kPa). After lamination, the composite material had a thickness of 6.5 mm, and the volume of carbon fiber was 60%. Observing the cross-section of the composite material by an optical microscope, the substantially spherical nylon particles were in a more or less flat arrangement and were fused to one another from place to place, so as to be present discontinuously in the matrix resin, and they were concentratively distributed between the layers, being lesser towards the inside. A microphotograph is shown in Fig. 7.

The quasi-isotropic hardened plate was cut to a size of 254 mm in length by 124 mm in width and a drop weight impact energy of 1000 inch-pound/inch (44.5 J/cm) was applied at the center. Then, the damaged area was measured by an ultrasonic flaw detector, and was found to be 2.1 square inches (13.5 cm²). Thereafter, the compressive strength after impact was measured according to ASTM D-695, and was found to be 30.9 kgf/mm² (303 MPa).

Next, 16 sheets of this prepreg were unidirectionally laminated and molded similarly into a composite material having a thickness of about 2 mm, which was then subjected to a tensile test in a direction perpendicular to that of the fiber, under a width of 25.4 mm, length 228.6 mm, testing length 127 mm and displacement speed 1.27 mm/min. The tensile strength was 9.0 kgf/mm² (88.3 MPa).

### Example 4

"Grilamide" TR-55 (product of Emser Welke) was milled by an impact-type milling machine and classified to a particle diameter of 30 µm or less. Using this, in the same manner as Example 3, a unidirectional prepreg of the following composition was produced. The amount of matrix resin was 69 g/m² and the amount of carbon fiber was 151 g/m². The amount of fine particles was 5.2 g/m². Here, it was observed by an optical microscope that the fine particles were evenly dispersed on both surfaces.
(1) Reinforcing fiber - Carbon Fiber T800H (product by Toray).
(2) Base resin - Same as that in Example 3.
(3) Fine particles - Grilamide (particle diameter 30 µm or less).

48 sheets of this prepreg were quasi-isotropically laminated and were molded and evaluated similarly to Example 3. After applying a drop weight impact energy of 1000 inch-pound/inch (44.5 J/cm) to the center, the damaged area was measured by an ultrasonic flaw detector, and was found to be 2.0 square inches (13 cm²). Subsequently, the compressive strength after impact was measured according to ASTM D-695, and was found to be 33.0 kgf/mm² (324 MPa). Also, a tensile test was made in a direction perpendicular to that of the fiber, and the tensile strength was found to be 9.2 kgf/mm² (90 MPa).

### Example 5

Polybutyleneterephthalate (product of Toray) was milled by an impact-type milling machine and classified to a particle diameter of 30 µm or less. Using this, in the same manner as Example 3, a unidirectional prepreg of the following composition was produced. The amount of matrix resin was 69 g/m² and the amount of carbon fiber was 150 g/m². The amount of fine particles was 5.2 g/m². Here, it was observed by an optical microscope that the fine particles were evenly dispersed on both surfaces of the prepreg.
(1) Reinforcing fiber - Carbon Fiber T800H (product of Toray).
(2) Base resin - Same as that in Example 3.
(3) Fine particles - Polybutyleneterephthalate (particle diameter 30 µm or less).

48 sheets of this prepreg were quasi-isotropically laminated and were molded and evaluated similarly to Example 3. After applying a drop weight impact energy of 1000 inch-pound/inch (44.5 J/cm) to the center, the damaged area was measured by an ultrasonic flaw detector, and was found to be 2.8 square inches (18 cm²). Then, the compressive strength after impact was measured according to ASTM D-695, and was found to be 23.4 kgf/mm² (229 MPa).

Example 5 failed to show as high a post impact compressive strength as that of Examples 3 or 4. This suggests that the adhesion between the fine particles and the matrix resin is strong with Nylon 12 and Grilamide but is relatively weak with polybutyleneterephthalate. However, the post impact compressive strength is obviously better than that of Comparative Example 2 hereinafter described.

### Example 6

Using the same fine particles as in and in the same manner as Example 4, a unidirectional prepreg of the following composition was produced. The amount of matrix resin was 69 g/m², and the amount of carbon fiber was 150 g/m². The amount of fine particles was 5.2 g/m².

Here, it was observed by an optical microscope that the fine particles were evenly dispersed over both surfaces of the prepreg.
(1) Reinforcing fiber - Carbon Fiber T800H (product of Toray).
(2) Base resin - Resin composition of the following components.
   1) 2,2-bis(4-maleimidephenyl)methane - 8.5 parts by weight.
   2) 2,2-bis(cyanatophenyl)propane - 76.5 parts by weight.
   3) Bisphenol F-type epoxy resin (Epicron 830, product of Dainippon Ink Kygyo).
   4) Dicumyl peroxide - 0.1 part by weight.
   5) Polyethersulfone 5003P (product of Mitsui-Toatsu) - 9 parts by weight.
(3) Fine particles - Grilamide (mean particle diameter, 30 µm).

48 sheets of this prepreg were quasi-isotropically laminated and were molded and evaluated similarly to Example 1. After applying a drop weight impact energy of 1000 inch-pound/inch (44.5 J/cm) to the center, the damaged area was measured by an ultrasonic flaw detector, and was found to be 2.0 square inches (13 cm²). Then, the compressive strength after impact was measured according to ASTM D-695, and was found to be 30.9 kgf/mm² (303 MPa).

Also, a tensile test was made in a direction perpendicular to that of the fiber, and the tensile strength was found to be 9.0 kgf/mm² (88.3 MPa).

### Example 7

A unidirectional prepreg of the following composition was produced.

The production was carried out by first preparing a prepreg containing 22% by weight of a resin comprised of A and B described below, then pasting a resin film having a blend resin of C and B spread in a thin layer on a release paper onto each surface of the prepreg. The parts by weight of C given below represent the quantity of fine particles contained in the finally obtained prepreg through the two above steps.
A: Reinforcing fiber - Carbon Fiber T800H (product of Toray).
B: Matrix resin - Resin composition of the following components.
   1) Phenol novolak-type epoxy resin (Epikote 154, product of Yuka Shell Epoxy Co.) - 60 parts by weight
   2) Bisphenol A-type epoxy resin (Epikote 828, product Yuka Shell Epoxy Co.) - 40 parts by weight
   3) 4,4ʹ-Diaminodiphenylsulfone (Sumicure S, product of Sumitomo Kagaku Kogyo) - 33.9 parts by weight
   4) Polyethersulfone 5200G (product of Mitsui-Toatsu) - 10 parts by weight
C: Fine particles - Fine particles of average size 15 µm obtained by freeze pulverization of a noncrystalline transparent nylon (Trogamide T, product of Dinamit Nobel) - 15 parts by weight
The weight percentage of the resin in the obtained prepreg was 33%. The quantity of resin was 72 g/m², and that of carbon fiber was 146 g/m². This prepreg was held between two smooth Teflon plates and hardened with the temperature raised gradually to 150°C over a period of seven days, and the cross-section was observed. Evaluating the quantity of fine particles present within the range defined by 30% of the thickness of the prepreg from the surface of the prepreg, it was found to be 96%. The cross-sectional observation was made with the fine particles selectively colored by osmium tetroxide and using a scanning electron microscope.

Next, 32 sheets of this prepreg were quasi-isotropically laminated and molded according to the conventional method by means of an autoclave at 180°C for 2 hours under a pressure of 6 kgf/cm² (588 kPa). After molding, the cross-section was observed by an optical microscope, and it was found that the fine particles were concentratively present in the interlaminar parts of the laminated plate. The border length factor was 3.45.

The quasi-isotropically hardened plate was cut to a size of 150 mm by 100 mm, and a drop weight impact energy of 1500 inch-pound/inch (66.7 J/cm) was applied to the center. The damaged area was determined by an ultrasonic flaw detector, and was found to be 2.0 square inches (13 cm²). Then, according to ASTM D-695, the compressive strength after impact was measured, and was found to be 31.2 kg/mm² (306 MPa).

Next, using the same prepreg, a unidirectional 16-ply laminate was molded into a composite material having a thickness of about 2 mm, which was cut into a length of 228.6 mm in the filament direction and a width of 25.4 mm and subjected to a tensile test at right angles to the fiber direction at a test length of 127 mm and a displacement speed of 1.27 mm/min. The tensile strength was found to be 9.0 kg/mm² (88.3 MPa).

### Example 8

A unidirectional prepreg as described below was prepared as follows: a prepreg which consisted of A and B defined below and had a resin content of 22 weight percent was prepared, and then resin sheets consisting of a blend resin of C and B being spread over release paper were attached to both sides of the prepreg. The content of C in weight parts shown below represents the amount of fine powder contained in the final prepreg resin obtained after the above two-step process.
A. Reinforcing fiber -- carbon fiber T800H (Toray Industries, Inc.)
B. Matrix resin -- resin with the following composition
   1) Tetraglycidyldiaminodiphenylmethane (ELM434, Sumitomo Chemical Co., Ltd.) - 80 parts by weight
   2) Aminophenolic epoxy resin (0510, Ciba-Geigy) - 20 parts by weight
   3) 4,4ʹ-diaminodiphenyl sulfone (Sumicure, Sumitomo Chemical Co., Ltd.) - 53.4 parts by weight
C. Semi-IPN fine powder -- with an average particle diameter of 16 µm, consisting of a mixture of 96/3/1 in weight ratio of amorphous transparent nylon (Grilamide TR-55, Emser Welke), bisphenol A epoxy resin (Epikote 828, Yuka Shell Epoxy) and polyamide-based curing agent (Tohmide #296, Fuji Kasei Corp., Ltd.) - 21 parts by weight.

The amount of resin in the resulting prepreg was 34 weight percent. The amounts of resin and carbon fiber were 60 g/m² and 149 g/m², respectively.

The prepreg was sandwiched between two Teflon plates with smooth surfaces and heated by raising the temperature very gradually to 150°C over seven days to ensure curing. Then its cross- sections were observed. The amount of fine powder contained in the 30%-thickness surface layer of the prepreg was evaluated and found to be 98 percent, indicating that particles were localized in the interlaminar portions. The observation of cross sections was carried out by performing selective dyeing of the fine powder with osmium tetroxide and examining them by scanning electron microscopy.

Next, 32 sheets of the prepreg were laminated in a quasi-isotropic arrangement and subjected to an ordinary mold process in an autoclave at 6 kgf/cm² (588 kPa) and 180°C for two hours. After the molding, cross sections were observed by optical microscopy. It was confirmed that semi-IPN fine particles were localized in portions between the lamination layers.

A 150 mm lengthwise by 100 mm crosswise section was cut out of the quasi-isotropic cured plate and subjected to a drop weight impact energy of 1500 inch-pound/inch (66.7 J/cm). Observation by an ultrasonic flaw detector showed that the damaged area was 0.7 square inches (4.5 cm²). Then, the compressive strength after impact was measured according to ASTM D-695 and was found to be 37.5 kg/mm² (368 MPa).

A unidirectional 16-ply laminated plate was prepared from the same prepreg, and a 1 cm lengthwise by 10 cm crosswise section was cut out of it and boiled in methyl ethyl ketone for 24 hours. No whitening was seen on the surface. The flexural strength of the test piece was 178 kg/mm² (1.75 GPa), which was nearly equal to the 177 kg/mm² (1.74 GPa) measured before immersion.

Fatigue resistance was evaluated after repeatedly applying a (tensile) load in the EDS (Edge Delamination Strength) test mode. No separation was found after a load of 20 kg/mm² 196 MPa) was repeatedly applied 106 times.

### Example 9

The semi-IPN fine powder used here had an average particle diameter of 20 µm and consisted of a mixture of 70/30/10 in weight ratio of polyether sulfone 5003P (Mitsui Totsu Chemicals, Inc.), bisphenol A epoxy resin (Epikote 828, Yuka Shell Epoxy) and 4,4'-diaminodiphenylmethane (Nakarai Chemicals, Ltd.). The same procedure as in Example 2 was carried out. A test piece was subjected to a drop weight impact energy of 1500 inch-pound/inch. Observation by an ultrasonic flaw detector showed that the damaged area was 2.0 square inches (13 cm²). Then, the compressive strength after impact was measured according to ASTM D-695 and was found to be 30.1 kg/mm² (295 MPa). The laminated plate was boiled in methyl ethyl ketone for 24 hours. No change in appearance was noticed.

### Example 10

A unidirectional prepreg of the following composition was produced. The production was carried out by first preparing a prepreg containing 21% by weight of a resin comprised of A and B described below, then pasting a resin film having a blend resin of C and B spread in a thin layer on a release paper onto each surface of the prepreg. The parts by weight of C given below represent the quantity of fine particles contained in the finally obtained prepreg through the foregoing two-step process.
A: Reinforcing fiber - Carbon Fiber T800H (product of Toray).
B: Matrix resin - Resin composition of the following components.
   1) Phenol novolak-type epoxy resin (Epikote 154, product of Yuka Shell Epoxy Co.) - 60 parts by weight
   2) Bisphenol A-type epoxy resin (Epikote 828, product of Yuka Shell Epoxy Co.) - 40 parts by weight
   3) 4,4ʹ-Diaminodiphenylsulfone (Sumicure S, product of Sumitomo Kagaku Kogyo) - 33.9 parts by weight
   4) Polyethersulfone 5200G (product of Mitsui-Toatsu) - 10 parts by weight
C: Fine particles - of average size 15µm obtained by freeze pulverization of a polyamideimide (Toron 4000T, product of Amoco Co.) - 15 parts by weight.

The weight percentage of resin in the obtained prepreg was 30%. The amount of resin was 69 g/m², and that of carbon fiber was 149 g/m².

The polyamideimide was press-molded into a resin plate, and the G_{IC} value was measured by the compact tension method according to ASTM E399, and was found to be 2350 J/m².

This prepreg was held between two smooth Teflon plates and hardened with the temperature raised gradually to 150°C over a period of seven days, and the cross-section was observed. Evaluating the quantity of fine particles present within the range defined by 30% of the thickness of the prepreg from the surface of the prepreg, it was found to be 96%, indicating that the fine particles were well localized in the interlaminar region. Cross-sectional observation was made with the fine particles selectively colored by osmium tetroxide and a scanning type electron microscope used.

Next, 32 sheets of this prepreg were quasi-isotropically laminated and molded according to the conventional method by means of an autoclave at 180°C for 2 hours under a pressure of 6 kgf/cm² (588 kPa). After molding, the cross-section was observed by an optical microscope, and it was found that the fine particles were concentratively present in the interlaminar parts of the laminated plate.

The quasi-isotropically hardened plate was cut to a size of 150 mm by 100 mm, and a drop weight impact energy of 1500 inch-pound/inch (66.7 J/cm) was applied to the center. The damaged area was determined by an ultrasonic flaw detector, and was found to be 2.2 square inches (14.2 cm²). Then, according to ASTM D-695, the compressive strength after impact was measured, and was found to be 30.2 kg/mm² (296 MPa).

### Example 11

A prepreg was produced through two steps of resin impregnation. First, a resin composition of the following components was prepared.
1) Tetraglycidyldiaminodiphenylmethane (ELM 434, product of Sumitomo Kagaku Kogyo) - 60 parts by weight
2) Bisphenol A-type epoxy resin (Epikote 828, product of Yuka Shell Epoxy Co.) - 40 parts by weight
3) 4,4'-Diaminodiphenylsulfone (Sumicure S, product of Sumitomo Kagaku Kogyo) - 42 parts by weight
4) Polyethersulfone 5200G (product of Mitsui-Toatsu) - 10 parts by weight
This resin composition was applied onto a release paper to provide a resin film for impregnation into the carbon fiber T800H (product of Toray) oriented in one direction, and a primary prepreg was thereby obtained. Next, to the foregoing resin composition, 30 parts by weight of Nylon 6 spherical particles SP-1000 (mean particle size 15µm; product of Toray) were blended in a kneader. This resin mixture had a viscosity of 150 poise (15 Pa.s) as measured at 80°C. The resin mixture was heated to 80°C and applied onto a release paper with a reverse coater used, and a resin film of uniform thickness was thereby obtained. Using this resin film and applying it to each surface of the primary prepreg prepared as above for impregnation of the resin, a unidirectional prepreg having fine particles on the surfaces was produced.

The content by weight of resin in the prepreg was 32%. The amount of resin was 71 g/m², and that of carbon fiber was 149 g/m².

This prepreg was held between two smooth Teflon plates and hardened with the temperature raised gradually to 150°C over a period of seven days, and the cross-section was observed. Evaluating the quantity of fine particles present in the range defined by 30% of the thickness of the prepreg from the surface of the prepreg, it was found to be 96%. Cross-sectional observation was made with the fine particles selectively colored by phosphotungstic acid and a scanning type electron microscope used.

Next, 32 sheets of this prepreg were quasi-isotropically laminated and molded according to the conventional method by means of an autoclave at 180°C for 2 hours under a pressure of 6 kgf/cm² (588 kPa). After molding, the cross-section was observed by an optical microscope, and it was found that the fine particles were concentratively present in the interlaminar parts of the laminated plate. The border length factors were 2.67 and 5.30.

The quasi-isotropically hardened plate was cut to a size of 150 mm by 100 mm, and a drop weight impact energy of 1500 inch-pound/inch (66.7 J/cm) was applied to the center. The damaged area was determined by an ultrasonic flaw detector, and was found to be 0.5 square inch (3.2 cm²). Then, according to ASTM D-695, the compressive strength after impact was measured, and was found to be 42.2 kg/mm² (414 MPa).

### Comparative Example 1

A prepreg was prepared as in Example 1, except that the amorphous transparent nylon was not used, and it was alternately laminated with a 15 µm thick amorphous transparent nylon (Trogamido T made by Dinamit Nobel) film prepared separately. The laminate was molded and further processed as done in Example 1.

A section was observed with a scanning electron microscope. The amorphous transparent nylon had formed layers separate from the matrix resin.

The amount of amorphous transparent nylon existing in the inter-layer zones was 100%, showing that the amorphous transparent nylon had been localized in the inter-layer zones. However, the border length factor was 2.2, showing that the contact area between the amorphous transparent nylon and the matrix resin or carbon fibers was very small.

The hardened quasi-isotropic plate was cut to 150 mm x 100 mm specimens, and a drop weight impact energy of 1500 inch-pounds/inch (66.7 J/cm) was applied to the center of each specimen. The damaged area was measured by an ultrasonic flaw detector and found to be 1.6 square inches (10.3 cm²). After the impact test, compressive strength was measured according to ASTM D-695 and found to be 27.0 kg/mm² (265 MPa), i.e., lower than that of Example 1.

As for fatigue resistance in the EDS mode, after a stress of 15 kg/mm² (147 MPa) was applied 2 x 10⁵ times, edge delamination occurred.

### Comparative Example 2

A unidirectional prepreg similar to Examples 3 to 5, except that the fine particles were not included, was prepared. The amount of matrix resin was 75 g/m², and that of carbon fiber was 150 g/m².

48 sheets of this prepreg were quasi-isotropically laminated and were molded and evaluated similarly to Example 3. After applying a drop weight impact energy of 1000 inch-pound/inch (44.5 J/cm) to the center, the damaged area was measured by an ultrasonic flaw detector and was found to be 8.6 square inches (55.5 cm²). Then, according to ASTM D-695, the compressive strength after impact was measured and found to be 18.1 kgf/mm² (178 MPa). Also, a tensile test was made in a direction perpendicular to that of the fiber, and the tensile strength was found to be 8.3 kgf/mm² (81.4 MPa).

### Comparative Example 3

A unidirectional prepreg similar to that of Example 6, except that the fine particles were not included, was prepared. 48 sheets of this prepreg were quasi-isotropically laminated and were molded and evaluated similarly to Example 3. After applying a drop weight impact energy of 1000 inch-pound/inch (44.5 J/cm) to the center, the damaged area was measured by an ultrasonic flaw detector and was found to be 8.8 square inches (57 cm²). Then, according to ASTM D-695, the compressive strength after impact was measured and was found to be 18.0 kgf/mm² (177 MPa). A tensile test was also made in a direction perpendicular to that of the fiber, and the tensile strength was found to be 8.1 kgf/mm² (79.4 MPa).

Our attention has now been drawn to EP-A-0 252 725 (Hercules Inc.), an application published after the date of filing of this application, and which concerns damage tolerant composites comprising high strength filaments in the form of bundles or tows of continuous fiber and a tough, phase separated, crosslinked epoxy resin matrix having infusible particles residing primarily between plies of the composite. In the priority document of that application, the particles comprise rubber polymers. We are not interested in having the particles of our new composite in the form of rubber particles, and we specifically exclude this from the invention claimed. The claims which follow incorporate this exclusion.

## Claims

1. A laminated composite material having lamination layers comprising
(i) reinforcing fibers mixed with a matrix resin which is a thermosetting resin or a mixture of a thermosetting resin and a thermoplastic resin; and
(ii) fine particles selected from thermoplastic and thermosetting resins (not being rubber polymers) and a mixture of such resins distributed as a separate phase in a matrix resin, at least 90% of these particles being localised in inter-layer zones, i.e.zones which lie at the edges of the lamination layers and which zones have a thickness which is not more than 30% of the thickness of the lamination layer.

2. A laminated composite material having lamination layers comprising
(i) reinforcing fibers mixed with a matrix resin which is a thermosetting resin or a mixture of a thermosetting resin and a thermoplastic resin; and
(ii) fine thermoplastic resin particles distributed as a separate phase in a matrix resin, at least 90% of these particles being localised in inter-layer zones, i.e.zones which lie at the edges of the lamination layers and which zones have a thickness which is not more than 30% of the thickness of the lamination layer.

3. A composite material according to either preceding claim, in which the inter-layer zones have a border length factor of 2.5 or more.

4. A composite material according to any preceding claim in which the fibers are at least 5 cm in length.

5. A prepreg suitable for making a composite material according to any preceding claim, the prepreg being constituted by reinforcing fibers mixed with a matrix resin which is a thermosetting resin or a mixture of a thermosetting resin and a thermoplastic resin and fine particles selected from thermoplastic and thermosetting resins (not being rubber polymers) and a mixture of such resins distributed as a separate phase in a matrix resin, at least 90% of the particles being localised in a zone or zones at one or both sides of the prepreg, the total thickness of the or each zone being 30% of the thickness of the prepreg.

6. A prepreg suitable for making a composite material according to any of Claims 1 to 4, the prepreg being constituted by reinforcing fibers mixed with a matrix resin which is a thermosetting resin or a mixture of a thermosetting resin and a thermoplastic resin, and fine thermoplastic particles distributed as a separate phase in a matrix resin, at least 90% of the particles being localised in a zone or zones at one or both sides of the prepreg, the total thickness of the or each zone being 30% of the thickness of the prepreg.

7. A prepreg according to Claim 5 or Claim 6 in which the zone has a border length factor of 2.5 or more.

8. A prepreg according to any of Claims 5 to 7 in which the fibres are at least 5 cm in length.

9. A prepreg according to any of Claims 5 to 8 in which the particles have a diameter within the range 0.1 µm to 150 µm.

10. A prepreg according to Claim 9 in which the particles have an average particle diameter of 2 to 60 µm.

11. A prepreg according to any of Claims 5 to 10 in which the particles are substantially spherical.

12. A prepreg according to any of Claims 5 to 11 in which the particles are composed of a resin having a strain energy releasing rate G_{Ic} of 1500 J/m² or more.

13. A prepreg according to any of Claims 5 to 12 in which the resin particles are produced from a combination of a thermosetting resin and a thermoplastic resin which has, or can develop, a semi-interpenetrating-polymer-network structure.

14. A prepreg according to any of Claims 5 to 12 in which the particles are composed of an epoxy resin and an amide which has, or can develop, a semi-interpenetrating-polymer-network structure with the epoxy resin.

15. A method of producing a prepreg according to any of Claims 5 to 14 which comprises first preparing a mixture of [B] matrix resin and [C] fine resin particles and then combining the mixture with [A] reinforcing fibers.

16. A method of producing a prepreg according to any of Claims 5 to 14 which comprises preparing a first mixture of [A] reinforcing fibers and [B] matrix resin, and a second mixture of [B] matrix resin and [C] resin particles and then applying the second mixture to one or both faces of the first mixture.

17. A method of producing a prepreg according to any of Claims 5 to 14 which comprises preparing a mixture of [A] reinforcing fibers and [B] matrix resin, then applying [C] resin particles to one or both faces of the mixture, and applying pressure to integrate the resin particles with the mixture of [A] and [B].

## Patentansprüche

1. Laminiertes Verbundmaterial mit Laminatschichten, enthaltend
(i) Verstärkungsfasern, die mit einem Matrixharz gemischt sind, das ein wärmehärtendes Harz oder eine Mischung aus einem wärmehärtenden Harz und einem thermoplastischen Harz ist; und
(ii) feine Teilchen, die aus thermoplastischen und wärmehärtenden Harzen (mit Ausnahme von Kautschukpolymeren) und einer Mischung aus solchen Harzen ausgewählt sind, die als eigene Phase in einem Matrixharz verteilt sind, wobei sich zumindest 90% dieser Teilchen in Zwischenschichtzonen befinden, d.h. in Zonen, die an den Rändern der Laminatschichten liegen und wobei diese Zonen eine Dicke aufweisen, die nicht mehr als 30% der Dicke der Laminatschicht beträgt.

2. Laminiertes Verbundmaterial mit Laminatschichten, enthaltend
(i) Verstärkungsfasern, die mit einem Matrixharz gemischt sind, das ein wärmehärtendes Harz oder eine Mischung aus einem wärmehärtenden Harz und einem thermoplastischen Harz ist; und
(ii) feine Teilchen aus thermoplastischem Harz, die als eigene Phase in einem Matrixharz verteilt sind, wobei sich zumindest 90% dieser Teilchen in den Zwischenschichtzonen befinden, d.h. in Zonen, die an den Rändern der Laminatschichten liegen und wobei diese Zonen eine Dicke aufweisen, die nicht mehr als 30% der Dicke der Laminatschicht beträgt.

3. Verbundmaterial nach einem der vorhergehenden Ansprüche, bei dem die Zwischenschichtzonen einen Grenzlängenfaktor von 2,5 oder mehr aufweisen.

4. Verbundmaterial nach einem der vorhergehenden Ansprüche, bei dem die Fasern eine Länge von zumindest 5 cm aufweisen.

5. Prepreg, das zur Herstellung eines Verbundmaterials nach einem der vorhergehenden Ansprüche geeignet ist, wobei das Prepreg aus Verstärkungsfasern, die mit einem Matrixharz gemischt sind, das ein wärmehärtendes Harz oder eine Mischung aus einem wärmehärtenden Harz und einem thermoplastischen Harz ist, sowie aus feinen Teilchen besteht, die aus thermoplastischen und wärmehärtenden Harzen (mit Ausnahme von Kautschukpolymeren) und einer Mischung aus solchen Harzen ausgewählt sind und die als eigene Phase in einem Matrixharz verteilt sind, wobei sich zumindest 90% der Teilchen in einer Zone oder Zonen auf einer oder beiden Seiten des Prepregs befinden und die Gesamtdicke der oder einer jeden Zone 30% der Dicke des Prepregs beträgt.

6. Prepreg, das zur Herstellung eines Verbundmaterials nach einem der Ansprüche 1 bis 4 geeignet ist, wobei das Prepreg aus Verstärkungsfasern, die mit einem Matrixharz, das ein wärmehärtendes Harz ist, oder einer Mischung aus einem wärmehärtenden Harz und einem thermoplastischen Harz gemischt sind, sowie feinen thermoplastischen Teilchen besteht, die als eigene Phase in einem Matrixharz verteilt sind, wobei sich zumindest 90% der Teilchen in einer Zone oder Zonen an einer oder beiden Seiten des Prepregs befinden und die Gesamtdicke der oder einer jeden Zone 30% der Dicke des Prepregs beträgt.

7. Prepreg nach Anspruch 5 oder 6, bei dem die Zone einen Grenzlängenfaktor von 2,5 oder mehr aufweist.

8. Prepreg nach einem der Ansprüche 5 bis 7, bei dem die Fasern eine Länge von zumindest 5 cm aufweisen.

9. Prepreg nach einem der Ansprüche 5 bis 8, bei dem die Teilchen einen Durchmesser im Bereich von 0,1 µm bis 150 µm aufweisen.

10. Prepreg nach Anspruch 9, bei dem die Teilchen einen durchschnittlichen Teilchendurchmesser von 2 bis 60 µm aufweisen.

11. Prepreg nach einem der Ansprüche 5 bis 10, bei dem die Teilchen im wesentlichen kugelförmig sind.

12. Prepreg nach einem der Ansprüche 5 bis 11, bei dem die Teilchen aus einem Harz mit einer Verformungsenergiefreisetzungsrate G_{Ic} von 1500 J/m² oder mehr bestehen.

13. Prepreg nach einem der Ansprüche 5 bis 12, bei dem die Harzteilchen aus einer Kombination aus einem wärmehärtenden Harz und einem thermoplastischen Harz erzeugt sind, das eine halb-interpenetrierende Polymernetzstruktur aufweist oder entwickeln kann.

14. Prepreg nach einem der Ansprüche 5 bis 12, bei dem die Teilchen aus einem Epoxyharz und einem Amid bestehen, das eine halb-interpenetrierende Polymernetzstruktur mit dem Epoxyharz aufweist oder entwickeln kann.

15. Verfahren zur Herstellung einer Prepregs nach einem der Ansprüche 5 bis 14, welches zuerst das Herstellen einer Mischung aus [B] Matrixharz und [C] feinen Harzteilchen und dann das Kombinieren der Mischung mit [A] Verstärkungsfasern umfaßt.

16. Verfahren zur Herstellung eines Prepregs nach einem der Ansprüche 5 bis 14, welches das Herstellen einer ersten Mischung aus [A] Verstärkungsfasern und [B] Matrixharz und einer zweiten Mischung aus [B] Matrixharz und [C] Harzteilchen und dann das Auftragen der zweiten Mischung auf eine oder beide Seiten der ersten Mischung umfaßt.

17. Verfahren zur Herstellung eines Prepregs nach einem der Ansprüche 5 bis 14, welches das Herstellen einer Mischung aus [A] Verstärkungsfasern und [B] Matrixharz und dann das Auftragen von [C] Harzteilchen auf eine oder beide Seiten der Mischung und das Aufbringen von Druck umfaßt, um die Harzteilchen mit der Mischung aus [A] und [B] zu integrieren.

## Revendications

1. Matériau composite stratifié ayant des couches de stratification comprenant
(i) des fibres de renforcement mélangées à une résine de la matrice qui est une résine thermodurcissable ou un mélange d'une résine thermodurcissable et d'une résine thermoplastique ; et
(ii) des particules fines choisies parmi les résines thermoplastiques et thermodurcissables (n'étant pas des polymères de caoutchouc) et un mélange de telles résines distribuées en tant qu'une phase séparée dans une résine de la matrice, au moins 90% de ces particules étant localisées dans des zones intercouches,c'est-à-dire des zones qui se trouvent aux bords des couches de stratification,lesquelles zones ont une épaisseur qui n'est pas supérieure à 30% de l'épaisseur de la couche de stratification.

2. Matériau composite stratifié ayant des couches de stratification comprenant
(i) des fibres de renforcement mélangées à une résine de matrice qui est une résine thermodurcissable ou un mélange d'une résine thermodurcissable et d'une résine thermoplastique ; et
(ii) des particules fines de résine thermoplastique distribuées sous la forme d'une phase séparée dans une résine de la matrice, au moins 90% de ces particules étant localisées dans des zones intercouches, c'est-à-dire des zones qui se trouvent aux bords des couches de stratification, lesquelles zones ont une épaisseur qui ne représente pas plus de 30% de l'épaisseur de la couche de stratification.

3. Matériau composite selon toute revendication précédente, où les zones intercouches ont un facteur de longueur de bordure de 2,5 ou plus.

4. Matériau composite selon toute revendication précédente, où les fibres ont au moins 5 cm de long.

5. Feuille pré-imprégnée appropriée à la production d'un matériau composite selon l'une quelconque des revendications précédentes, la feuille pré-imprégnée étant constituée de fibres de renforcement mélangées à une résine de matrice qui est une résine thermodurcissable ou un mélange d'une résine thermodurcissable et d'une résine thermoplastique et de particules fines choisies parmi des résines thermoplastiques et thermodurcissables (pas des polymères de caoutchouc) et un mélange de telles résines distribuées en tant que phase séparée dans une résine de matrice, au moins 90% des particules étant localisées dans une zone ou des zones à l'un ou les deux côtés de la feuille pré-imprégnée, l'épaisseur totale de la ou chaque zone étant de 30% de l'épaisseur de la feuille pré-imprégnée.

6. Feuille pré-imprégnée appropriée à la production d'un matériau composite selon l'une quelconque des revendications 1 à 4, la feuille pré-imprégnée étant constiutuée de fibres de renforcement mélangées à une résine de matrice qui est une résine thermodurcissable ou mélange d'une résine thermodurcissable et d'une résine thermoplastique et de particules thermoplastiques fines distribuées sous la forme d'une phase séparée dans une résine de matrice, au moins 90% des particules étant localisées dans une zone ou des zones à l'un ou les deux bords de la feuille pré-imprégnée, l'épaisseur totale de la ou chaque zone étant de 30% de l'épaisseur de la feuille pré-imprégnée.

7. Feuille pré-imprégnée selon la revendication 5 ou la revendication 6, où la zone a un facteur de longueur de bordure de 2,5 ou plus.

8. Feuille pré-imprégnée selon l'une quelconque des revendications 5 à 7, où les fibres ont au moins 5 cm de long.

9. Feuille pré-imprégnée selon l'une quelconque des revendications 5 à 8, où les particules ont un diamètre compris entre 0,1 µm et 150 µm.

10. Feuille pré-imprégnée selon la revendication 9, où les particules ont un diamètre moyen de 2 à 60 µm.

11. Feuille pré-imprégnée selon l'une quelconque des revendications 5 à 10, où les particules sont sensiblement sphériques.

12. Feuille pré-imprégnée selon l'une quelconque des revendications 5 à 11, où les particules se composent d'une résine ayant un taux de libération de l'énergie d'effort G_{Ic} de 1500 J/m² ou plus.

13. Feuille pré-imprégnée selon l'une quelconque des revendications 5 à 12, où les particules de résine sont produites à partir d'une combinaison d'une résine thermodurcissable et d'une résine thermoplastique qui a ou peut développer une structure d'un réseau polymérique en semi-interpénétration.

14. Feuille pré-imprégnée selon l'une quelconque des revendications 5 à 12, où les particules se composent d'une résine époxy et d'un amide qui a ou peut développer une structure d'un réseau polymérique à semi-interpénétration avec la résine époxy.

15. Méthode de production d'une feuille pré-imprégnée selon l'une quelconque des revendications 5 à 14, qui consiste à préparer d'abord un mélange de [B] une résine de matrice et [C] des particules fines de résine puis à combiner le mélange avec [A] les fibres de renforcement.

16. Méthode de production d'une feuille pré-imprégnée selon l'une quelconque des revendications 5 à 14, qui consiste à préparer un premier mélange de [A] les fibres de renforcement et [B] une résine de la matrice et un second mélange de [B] la résine de la matrice et [C] des particules de résine puis à appliquer le second mélange à l'une ou les deux faces du premier mélange.

17. Méthode de production d'une feuille pré-imprégnée selon l'une quelconque des revendications 5 à 14, qui consiste à préparer un mélange de [A] les fibres de renforcement et de [B] la résine de la matrice puis à appliquer [C] les particules de résine à l'une ou les deux faces du mélange, et à appliquer de la pression pour intégrer les particules de résine au mélange de [A] et [B].
